(19) Europäisches Patentamt
European Patent Office
Office européen des brevets

(11) **EP 1 826 696 B1**

(12) **EUROPEAN PATENT SPECIFICATION**

(45) Date of publication and mention
of the grant of the patent:
**06.06.2012 Bulletin 2012/23**

(51) Int Cl.:
***G06F 21/00*** (2006.01)

(21) Application number: **06270027.3**

(22) Date of filing: **28.02.2006**

(54) **Secure random checksum distribution**

Sichere Prüfsummenzufallsverteilung

Distribution sécurisée aléatoire des sommes de contrôle

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**29.08.2007 Bulletin 2007/35**

(73) Proprietor: **Microsoft Corporation**
**Redmond, WA 98052 (US)**

(72) Inventors:
• **Hydrie, Aamer**
**Redmond, WA 98052 (US)**
• **Klemets, Anders**
**Redmond, WA 98052 (US)**
• **Gkantsidis, Christos**
**Microsoft Research Ltd**
**Cambridge, Cambridgeshire CB3 0FB (GB)**
• **Miller, John**
**Microsoft Research Ltd**
**Cambridge, Cambridgeshire CB3 0FB (GB)**
• **Rodriguez, Pablo Rodriguez**
**Microsoft Research Ltd**
**Cambridge, Cambridgeshire CB3 0FB (GB)**
• **Weiss, Rebecca**
**Redmond, WA 98052 (US)**

(74) Representative: **Wallis, Helen Frances Mary**
**Olswang LLP**
**90 High Holborn**
**London WC1V 6XX (GB)**

(56) References cited:
**EP-A- 1 107 137**

• **WIKIPEDIA, [Online] 26 February 2006 (2006-02-26), XP002391553 Retrieved from the Internet: URL:http://en.wikipedia.org/w/index.php?ti tle=BitTorrent&oldid=41241591> [retrieved on 2006-07-21]**
• **SCHNEIER B: "ONE WAY HASH FUNCTIONS" APPLIED CRYPTOGRAPHY, XX, XX, 1996, pages 30-31,189, XP002341498**
• **SCHNEIER B: "ONE-WAY HASH FUNCTIONS" DR. DOBB'S JOURNAL, M&T PUBL., REDWOOD CITY, CA,, US, vol. 16, no. 9, September 1991 (1991-09), pages 148-151, XP002044823 ISSN: 1044-789X**
• **SCHNEIER B: "SECURE HASH ALGORITHM (SHA)" APPLIED CRYPTOGRAPHY. PROTOCOLS, ALGORITHMS, AND SOURCE CODE IN C, NEW YORK, JOHN WILEY & SONS, US, 1996, pages 442-445, XP000619791 ISBN: 0-471-11709-9**

**Description**

BACKGROUND

Content distribution systems have been developed to enable data such as software updates, critical patches, and multimedia content to be distributed to nodes in a network. Typically these systems comprised many servers which were placed in the network, with nodes connecting directly to one of the servers to download the required file. However, such systems are constrained by the connection bandwidth to the servers and require considerable investment to increase the capacity of the system. Consequently, content distribution systems have been developed which rely on a fully distributed architecture with nodes in the network participating in the distribution process. Such systems may be referred to as peer-to-peer or peer-assisted content distribution systems. In such a system, the server may divide the file to be distributed into a number of blocks and provide these blocks to nodes in the network. As soon as a node has received one or more blocks, the node can act as a source of the received blocks for other nodes whilst concurrently receiving further blocks until they have received all the blocks of the file. Unless nodes are aware of which blocks are both required and held by other nodes in the network, such systems can experience problems including rare blocks and network bottlenecks.

More recently, cooperative content distribution systems have been developed to avoid the rare block problem and the requirement for a node to be aware of all the other nodes in the system. Such systems use network coding, which means that each node in the system generates and transmits encoded blocks of information, these newly encoded blocks being a linear combination of all the blocks currently held by the particular node. This compares to earlier systems where the encoding of the blocks only occurred at the server.

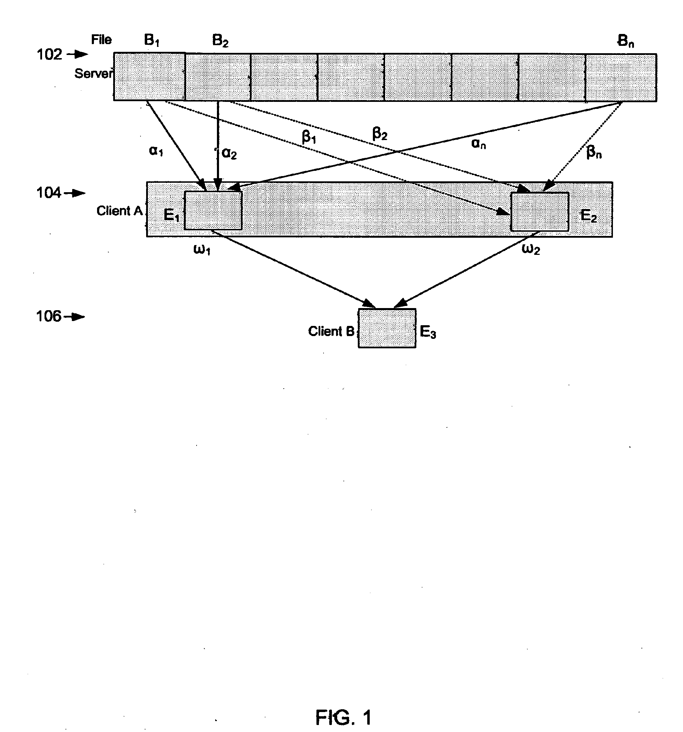

The use of network coding can be described with reference to FIG. 1, which shows the flow of blocks between a server 102 and two clients (or nodes), client A 104 and client B 106. Initially all the blocks, $B_1$-$B_n$, are held only by the server and not by any nodes. When client A contacts the server to get a block, the server produces an encoded block $E_1$ which is a linear combination of all the blocks in the file, such that:

$$E_1 = \alpha_1 B_1 + \alpha_2 B_2 + \ldots\ldots + \alpha_n B_n$$

where $\alpha_i$ are random coefficients. In order that the block size does not increase, these operations take place within a finite field, typically GF($2^{16}$). The server then transmits to client A both the newly encoded block $E_1$ and the coefficient vector ($\alpha_i$). Client A may also receive a second encoded block $E_2$ from the server, created using a second set of random coefficients $\beta_i$. When client A needs to transmit a block to client B, client A creates a third encoded block, $E_3$ from a linear combination of $E_1$ and $E_2$ using random coefficients $\omega_i$.

When network coding is used as described above, a client can recover the original file after receiving n blocks that are linearly independent from each other, in a process similar to solving a set of linear equations. If the coefficients are chosen at random by each client, a client will be unlikely to receive a block which is not of use to that client. However, to further check this, clients may transmit the coefficient vector to a receiving client (client B in the example of FIG. 1) in advance of the block itself. The receiving client can then check whether the resultant block would provide it with any new information and only request the downloading of the block if it will be of use to the receiving client.

Malicious users can cause problems for peer-to-peer systems in many ways. These include distribution of false content (i.e. content which is not what it purports to be). This false content may include viruses or other harmful programs or may just waste network resources sharing data which is unwanted. Malicious users may distribute corrupted downloaded data which may then be distributed by other peers who are unaware that it is corrupted. This may result in such large scale dissemination of corrupted data that the distribution of a particular piece of data is impossible. In peer-to-peer networks that use network coding, false content can be a particular problem. If a malicious user introduces a corrupt or otherwise useless block, this block will be combined with valid blocks by peers in the network who are unaware that the block is corrupt, thereby creating more encoded corrupt blocks. These new corrupt blocks will be transmitted to other peers and combined again with valid blocks to create further corrupt blocks. By this mechanism, the corrupt data can propagate very rapidly throughout the distribution network rendering all the blocks of data useless.

The paper "Network Coding for Large Scale Content Distribution" by Chr. Gkantsidis and P.R. Rodriguez discusses network coding in content distribution networks and security implications of malicious nodes but suggests digital signatures with homomorphic hushes as a solution for fighting corrupt blocks.

In other examples, malicious users may instigate denial of service attacks against particular elements in the network, for example by making repeated connection attempts which may subsequently be aborted but which consume resources. Depending on where the denial of service attack is directed against, such an attack may cause the entire distribution system to fail or may just affect one or more individual users.

The invention seeks to provide methods and apparatus which enable blocks to be checked upon receipt by a peer, thereby mitigating problems of known content distribution systems.

SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

The present example provides a control node for a content distribution system which uses network coding to distribute content, a piece of content comprising a plurality of blocks and the control node comprising: a store arranged to store a first plurality of data sets associated with the a piece of content, wherein each data set comprises a secure random checksum for each of the plurality of blocks and data used in generating the secure random checksums; means for selecting a second plurality of data sets from the first plurality of data sets for provision to a peer wherein the second plurality of data sets comprises a subset of the first plurality of data sets; and means for providing the second plurality of data sets to the peer, wherein each data set is usable to check the validity of the piece of content received from the system.

Advantageously, this enables peers to check the validity of content that they receive over the network. It results in significant storage and computation savings, particularly for popular content or for content whose popularity is not known beforehand, whilst ensuring no significant impact to security. Additionally, this enables the control node to ensure that a peer is not given all the data sets. This means that a malicious peer cannot create a corrupt block which passes all the checksums.

Preferably, the data used in generating the secure random checksums comprises at least one of: a numerical seed, a random number generating algorithm, and a stream of random or pseudo-random numbers.

Preferably the control node further comprises: means for determining an identifier associated with the peer; and wherein the means for selecting is arranged to select the second plurality of data sets based on the identifier.

Advantageously, this provides a means for ensuring that the data sets provided to peers are well distributed across the entire group of data sets such that two different peers are unlikely to receive identical groups of data sets.

Preferably the identifier comprises one of: a unique identification number, a public key, an IP address, a network hardware address, a software activation key and a hardware serial number.

Preferably the means for selecting is further arranged to select the second plurality of data sets based on the identifier and a mapping function.

Preferably the means for selecting is further arranged to modify the identifier using a modifying function to create a modified identifier and to select the second plurality of data sets based on the modified identifier and the mapping function.

Advantageously, this assists in providing a good distribution in data sets provided to different peers.

Preferably the modifying function is a hash function such as SHA-1 or MD5.

The control node may further comprise means for generating the first plurality of data sets.

A second example provides a method of enabling validity checking of a piece of content distributed across a network using network coding, the piece of content comprising a plurality of blocks and the method comprising: storing a first plurality of data sets associated with the piece of content, wherein each data set comprises a secure random checksum for each of the plurality of blocks and data used in generating the secure random checksums; selecting a second plurality of data sets from the first plurality of data sets for provision to a peer wherein the second plurality of data sets comprises a subset of the first plurality of data sets; and providing the second plurality of data sets to the peer, wherein each data set is usable to check the validity of the piece of content received from the network.

Advantageously, this removes a bottleneck in validating network-coded data transmissions. It results in significant storage and computation savings, particularly for popular content or for content whose popularity is not known beforehand. The method provides an alternative to requiring a central server to distribute unique lists of checksums to every client. It presents a way of generating and distributing a subset of a small set of lists of checksums to a large number of clients while ensuring no significant impact to security. The distribution and selection parameters may be selected by a publisher to meet their security requirements.

Preferably the data used in generating the secure random checksums comprises at least one of: a numerical seed, a random number generating algorithm, and a stream of random or pseudo-random numbers.

Preferably the step of selecting a second plurality comprises: determining an identifier associated with the peer; and selecting a second plurality of data sets from the first plurality of data sets for provision to the peer based on the identifier.

Preferably the identifier comprises one of: a unique identification number, a public key, an IP address, a network hardware address, a software activation key and a hardware serial number.

Preferably the step of determining an identifier comprises: receiving a message from the peer; and performing authentication with the peer to determine an identifier associated with the peer.

Preferably the mapping function is arranged to select a plurality of sets of bits from the identifier, and to select each of the second plurality of data sets based on a different set of bits from the selected plurality of bits.

Preferably the step of selecting a second plurality of data sets is based on the identifier and a mapping function.

Preferably the step of selecting a second plurality of data sets is based on the identifier and a mapping function comprises: modifying the identifier using a modifying function to create a modified identifier; and selecting the second plurality of data sets based on the modified identifier and the mapping function.

Preferably the mapping function is adapted to select a substantially different second plurality of data sets for a first and a second peer, wherein a first identifier is associated with the first peer and a second identifier is associated with the second peer and wherein the first and second identifiers are different.

Preferably the modifying function is a hash function, such as a SHA-1 or MD5 function.

Preferably, the method further comprises: generating the first plurality of data sets.

A third example provides a computer program comprising computer program code means adapted to perform all the steps of the methods described above when said program is run on a computer.

It will be appreciated that the terms "computer" is used in the broadest sense and relates to any programmable device, rather than being limited to a personal computer. The phrases "computer program" and "computer program code" is intended to cover any device executable instructions.

Preferably the computer program is embodied on a computer readable medium.

Again the term "computer readable medium" is intended to cover any device readable medium.

A fourth example provides a method of enabling validity checking of content distributed across a network, the content comprising a plurality of blocks and the method comprising: generating a plurality of data sets associated with the content, wherein each data set comprises a checksum for each of the plurality of blocks and data used in generating the checksums; and providing the plurality of data sets and information for use in selection of a subset of the plurality of data sets to a control node, wherein each data set is usable to check the validity of content received from the network.

A fifth example provides a method of validity checking of content distributed across a network, the content comprising a plurality of blocks and the method comprising: receiving a plurality of data sets associated with the content, wherein each data set comprises a checksum for each of the plurality of blocks and data used in generating the checksums; and using each of the plurality of data sets to check the validity of content received from the network.

The method may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

DESCRIPTION OF THE DRAWINGS

The present description will be better understood from the following detailed description read in light of the accompanying drawings, wherein:

FIG. 1 shows a flow of blocks in a content distribution system using network coding;
FIG. 2 is a schematic diagram of a content distribution system;
FIG. 3 shows an example flow diagram for the operation of a node in the system of FIG. 1;
FIG. 4 is a schematic diagram showing the generation of SRC series;
FIG. 5 shows an example flow diagram for the operation of a second node in the system of FIG. 1 ;
FIG. 6 which shows an example architecture for the second node in the system of FIG. 1;
FIG. 7 shows a schematic diagram of the selection of SRC series for the example where N=12 and K=3;
FIG. 8 shows an example flow diagram for the operation of a third node in the system of FIG. 1 ;
FIG. 9 is a schematic diagram of a second content distribution system;
FIG. 10 shows an example flow diagram for the operation of a node in the system of FIG. 9;
FIG. 11 shows an example flow diagram for the operation of a second node in the system of FIG. 9; and
FIG. 12 shows an example flow diagram for the operation of a third node in the system of FIG. 9.

Like reference numerals are used to designate like parts or method steps in the accompanying drawings.

DETAILED DESCRIPTION

The detailed description provided below in connection with the appended drawings is intended as a description of the present examples and is not intended to represent the only forms in which the present example may be constructed or utilised. The description sets forth the functions of the example and the sequence of steps for constructing and operating the example. However, the same or equivalent functions and sequences may be accomplished by different examples.

Although the present examples are described and illustrated herein as being implemented in a peer-assisted distribution system (also known as a peer-to-peer distribution system), the system described is provided as an example and not a limitation. As those skilled in the art will appreciate, the present examples are suitable for application in a variety of different types of content distribution and / or content sharing systems.

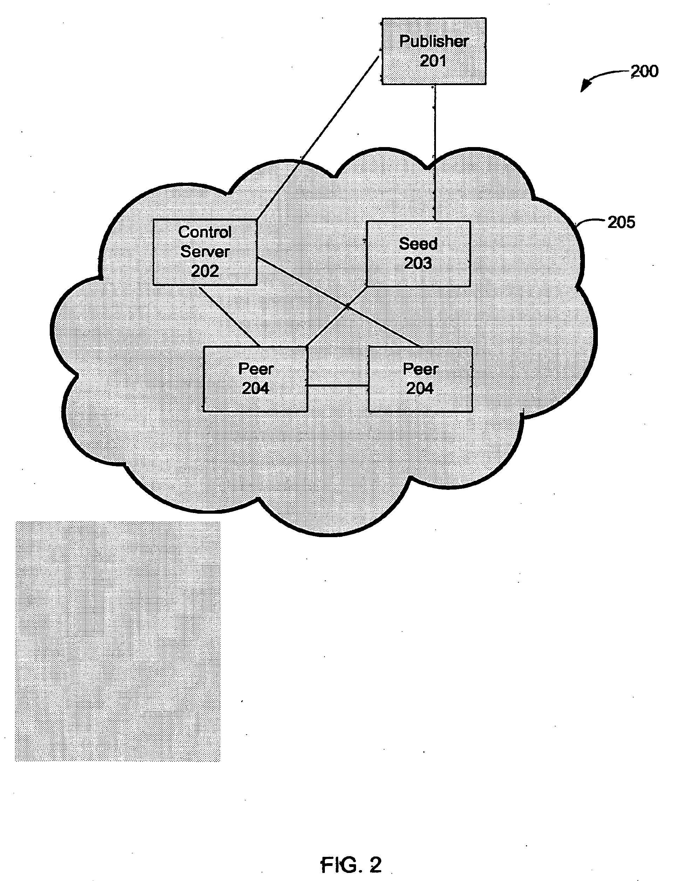

FIG. 2 is a schematic diagram of a content distribution system 200, which comprises a publisher 201, a control server 202, a seed 203 and two peers 204.

A cloud 205 defines the set of all nodes participating in the distribution of a given piece of content. The content may be any kind of data and may be distributed, for example, as encoded blocks using network coding. The publisher 201 is the entity which provides the content, for example a user or a corporation. The publisher may lie within the content cloud 205 or outside (as shown in FIG. 2). The control server 202 helps peers 204 find other peers which are participating in the distribution of a particular piece of content. The control server 202 may be owned by or associated with the publisher 201. Alternatively, the control server may be independent of the publisher. The seed 203 is a client which is usually always on and is where the publisher places a piece of content for subsequent distribution within the system. A seed 203 uploads the content to a small number of peers 204 in the system 200 (this may be to as few as a single peer) but does not download the same content from other nodes in the system. The term 'node' is used herein to refer to any logical entity within the system. A peer 204 is a client which is interested in obtaining the content held by the seed 203. A peer will download the content from nodes (i.e. seeds or other peers) in the system and may also upload those parts of the content that it has received to other peers in the system. A peer may act as a temporary or virtual seed once it has received all the particular piece of content, by making the content available for uploading to other peers in the system, whilst no longer downloading the content from peers. The content may be distributed within the cloud in an encoded format or alternatively the content may be not be encoded. FIG. 2 shows some logical connections between parts of the system 200, however those shown are not exhaustive and are for illustration purposes only.

A skilled person will appreciate that a content distribution system may comprise some or all of the network elements shown in FIG. 2 and may comprise additional network elements. The elements shown in FIG. 2 are functional elements and a network element may perform one of more of the functional elements, e.g. the control server and seed functions may performed by the same node or the publisher could also act as the seed.

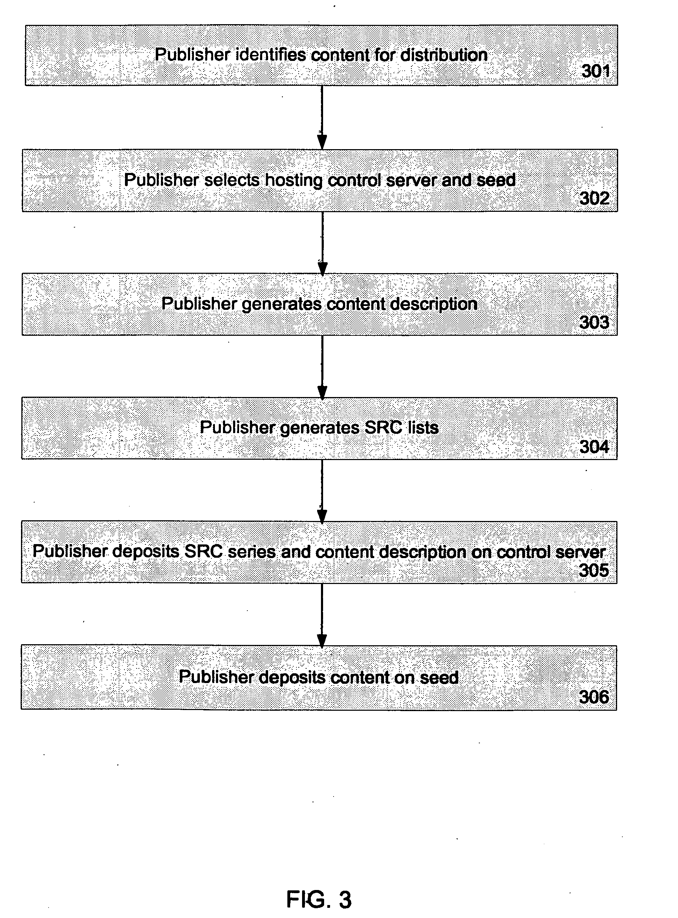

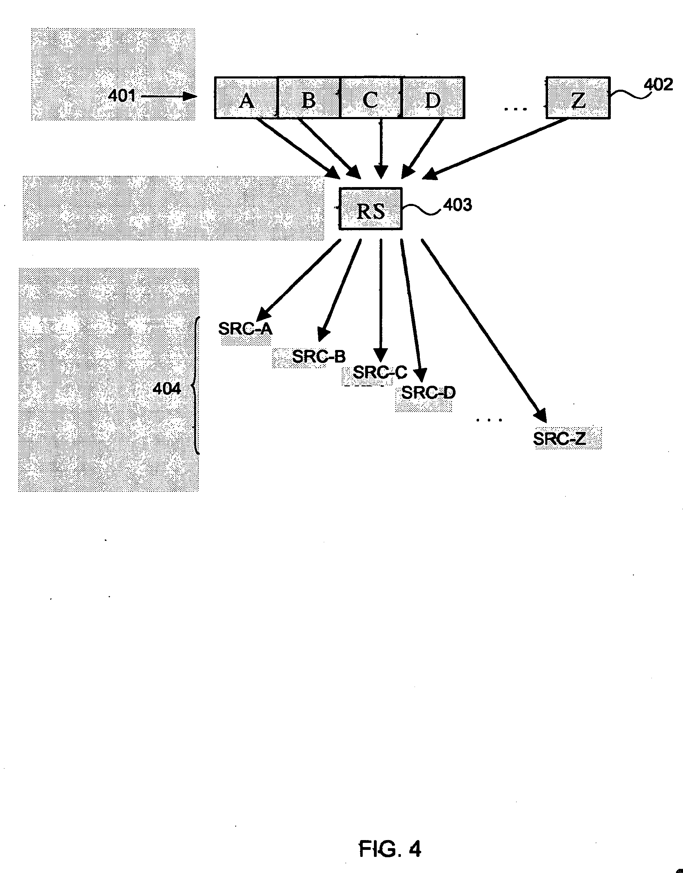

An example of the operation of the system 200 shown in FIG. 2 can be described with reference to FIGS. 3-8. As shown in FIG. 3, the publisher 201 identifies the content to be distributed (step 301) and selects a hosting control server 202 and a seed 203 (step 302). The publisher generates a content description which it may digitally sign (step 303). The content description may include one or more of: a publisher identifier, an identifier for the selected hosting control server, an identifier for the selected seed, a unique identifier for the content and information to enable integrity checking of the downloaded content. The publisher also generates a number, N, of secure random checksum (SRC) lists (step 304), for example 1000 SRC lists. These SRC lists and methods for generating them are described in more detail below. Having generated the content description and SRC lists (in steps 303 and 304), the content description and SRC series (one series for each list) are deposited on the control server 202 (step 305). In one example, an SRC series (also referred to as a 'data set') comprises an SRC list and the numerical seed used to create the SRC list, as described in more detail below with reference to FIG. 4. An SRC series may also include the unique identifier of the content to which if relates. This provides a means to correlate the content description and SRC series for the same piece of content. In addition (or instead) the content description and SRC series may be digitally signed using the same key. The publisher may also provide the control server with additional information relating to how the SRC series should be provided to peers, as described below. In order to enable the distribution of content, the particular piece of content for distribution is deposited on the seed server 203 (step 306). Having deposited the information on the control server 202 and the seed 203, the publisher 201 may play no further part in the content distribution process. However, the publisher may update and reissue the content description or generate additional SRC lists if required whilst the content is being distributed.

The term 'checksum' is used herein to refer to a computed value for a piece of data (e.g. a block of data) that is dependent upon the contents of the data. The checksum may be computed in any way and may take any form. The term 'random checksum' is used herein to refer to a checksum (as described above) which is computed using one or more random or pseudo-random numbers. Secure random checksums (SRCs) can be used to validate network encoded data by providing the ability to detect corruption in transferred blocks, i.e. they can be used to determine whether an encoded block has a valid relationship to the source (uncoded) blocks from which it claims to be derived. The SRC values for appropriate encoded blocks can be combined in a manner related to the way the uncoded blocks were combined to make the encoded block. This process is described in more detail below. Homomorphic hash algorithms can also be used to detect corruption in transferred blocks, however SRCs have significantly improved performance, for example, the evaluation of the correctness of a block may be achieved around ten times faster using SRCs compared to using a homomorphic hash.

The generation of SRCs can be described with reference to FIG. 4. For file distribution, the content (also referred to as the 'source file') is divided up into a number of pieces, referred to as blocks. For example, a 4 GB file may be divided into 2048 blocks each of which is 2 MB in size. For purposes of explanation, FIG. 4 shows a content file 401 which has been divided into 26 blocks 402, labelled A to Z. An SRC for each uncoded block A-Z is calculated by first seeding a random number generator with a known seed (e.g. 0x38572BEF01547B2C) to generate a deterministic sequence of pseudo-random numbers the size of a single block, referred to as a random stream (RS) 403. The seed may be, for example, a 32-bit or a 64-bit seed. The sequence of pseudo-random numbers 403 is then combined with the sequence of bytes in the first uncoded block (block A) to calculate the SRC for that block (SRC-A). A simplified example of this calculation is shown below:

Block A comprises bytes B1, B2...,Bn
The RS comprises pseudo-random numbers R1, R2...,Rn

$$SRC{-}A = (B1.R1) + (B2.R2) + \ldots + (Bn.Rn)$$

These arithmetic operations all take place within a finite field, also referred to as a Galois field, (typically $2^{16}$, referred to as a 16-bit Galois field). The calculations are then repeated for each of the blocks in turn (from block A to block Z) to create a list of SRCs 404 comprising one SRC for each uncoded block (SRC-A to SRC-Z). In this example the SRC series comprises an SRC list and the numerical seed used in the generation of that SRC list, (note that this numerical seed is not related in any way to the seed 203 which is a server). In this example, the random stream (RS) is not included in the SRC series and hence is not stored on the server 202 and provided to peers 204. In another example, the random stream may be provided within the SRC series instead of (or in addition to) the numerical seed. However, as the random stream is much larger than the numerical seed, this is much less efficient (e.g. more storage and transmission space is required). It may be beneficial in some examples, however, to provide the random stream in the SRC series, for example when the stream is truly random and so is not reproducible with a known algorithm and seed. A peer 204 can regenerate the stream of pseudo-random numbers using the seed contained within the SRC series, as is described below.

Having generated one SRC list, as described above, further SRC lists can be generated using different seeds input to the random number generator to create the random stream. As described above, a publisher may create a large number, N, of SRC lists, e.g. N= 1000.

In addition to providing the control server with the SRC series (in step 305), the publisher may also deposit information on how the SRC series should be distributed to peers. This additional information may include a number, K, of SRC series which should be given to each peer and a method to use to select the K SRC series from the total number, N, of SRC series generated by the publisher and deposited on the control server.

The publisher may select values of N and K based on several factors including, but not limited to, resistance to a malicious attack, probability of a corrupted block not being detected, processing resources for calculation of SRC series and bandwidth for distribution of SRC series. The publisher can select values of N and K to give a degree of risk that meets their security requirements. In addition to selecting N and K, the size of the seed used to generate the SRC values may be selected, with larger seeds providing more resistance to malicious attacks than smaller seeds (e.g. a 64-bit seed compared to a 16-bit seed). This is because it becomes computationally unfeasible for a malicious user to request enough SRC lists or to calculate enough SRC lists once they have the full content. This means that it is not possible for the user to create a corrupt block which passes all possible SRCs. Larger seeds may however require more complex random number generators. The publisher may also be able to select the random number generation algorithm. Details of the algorithm or a pointer to information on it may be provided to the peers as part of the SRC series, within a content description or separately (e.g. at the same time as SRC series and content description).

If only one SRC series is generated and each peer is sent the same SRC series (K= N=1), this requires minimum processing power and for a 16-bit SRC, results in a low probability, (approximately $1/2^{16}$), of the SRC not detecting accidental corruption. If more SRC series are generated whilst still sending all series to all peers (K=N=x, where x>1) then the probability of the SRC not detecting the accidental corruption is reduced significantly (e.g. for 16-bit SRC, it is approximately $(1/2^{16})^K$). However, although such use of SRCs enables detection of accidental / random block corruption, it does not guard against malicious and intentional block corruption because each peer knows all the random seeds used to generate the SRC lists. This means that a malicious peer could create a corrupted block which passed all the SRCs and therefore would not be identified as corrupt by a recipient peer.

A solution to this would be to provide each peer with different SRCs so that a malicious peer would only know their own SRC. However, if a piece of content is distributed to very large numbers of peers in a relatively short period of time (e.g. 10 million people in one day), then generating and distributing huge numbers of SRC series (e.g. 10x10 million = 100 million SRCs) would require huge computing resources, server storage requirements and network bandwidth. This would reduce the number of peers which could be handled by a single control server. Furthermore as it is often not possible to predict the popularity of a particular piece of content in advance of its distribution, the publisher is unlikely to know how many SRCs to generate, leading to either the requirement for SRC generation during the content distribution process (see below) or the generation of very large numbers of SRCs for all content.

Another solution would be generation of SRCs on demand by the publisher (or another node, such as the control server or the seed). These SRCs could then be distributed to peers by the generating node or alternatively they could be transmitted to, and stored by, another node (e.g. the control server) for distribution to peers. Where the SRCs are generated by a first node (e.g. the publisher) and stored on a second node (e.g. the control server), the publisher could generate and provide the SRCs in batches, with further batches being generated when the number of remaining new SRCs stored at the control server falls below a threshold. The generation of SCRs is, however, computationally intensive and so this technique would therefore limit the other activities that the node could perform concurrently and also limit the numbers of peers that could be serviced by that node.

By selecting K series from N series (where K<N) and providing different peers with well-distributed selections of series (i.e. such that two peers are unlikely to be sent the same subset of series), a malicious peer cannot know all the SRC information (i.e. all the seeds and / or all the SRC values) and therefore cannot create a corrupted block which passes all the SRCs. In this situation, the possibility that a malicious user could create a corrupted block that would pass the SRC checks of one peer is very small whilst the possibility that the block would pass the SRC checks of two or more peers is significantly smaller. Consequently the chance of widespread poisoning of a content distribution cloud is extremely small. Further measures may also be taken to reduce the possibility that a malicious user could obtain details of all the SRC series, all the random streams or all the seeds used to generate the SRC lists. Such measures and the selection process are described in more detail below.

As the publisher 201 is depositing all the SRC series on the control server 202, it may be beneficial for authentication to occur between the publisher and the control server prior to the SRC series being deposited (e.g. prior to step 305 in FIG. 3). This enables the publisher to identify the control server so as to reduce the likelihood of depositing the SRC series on a rogue control server that would circulate all the SRC data freely. This also enables the publisher to block the control server and not use them again in the future if they are ever found to have distributed the SRC data in a manner contrary to the rules provided by the publisher. In addition to performing authentication with the control server 202, the publisher 201 may also authenticate with the seed 203 prior to depositing the content on the seed (e.g. prior to step 306).

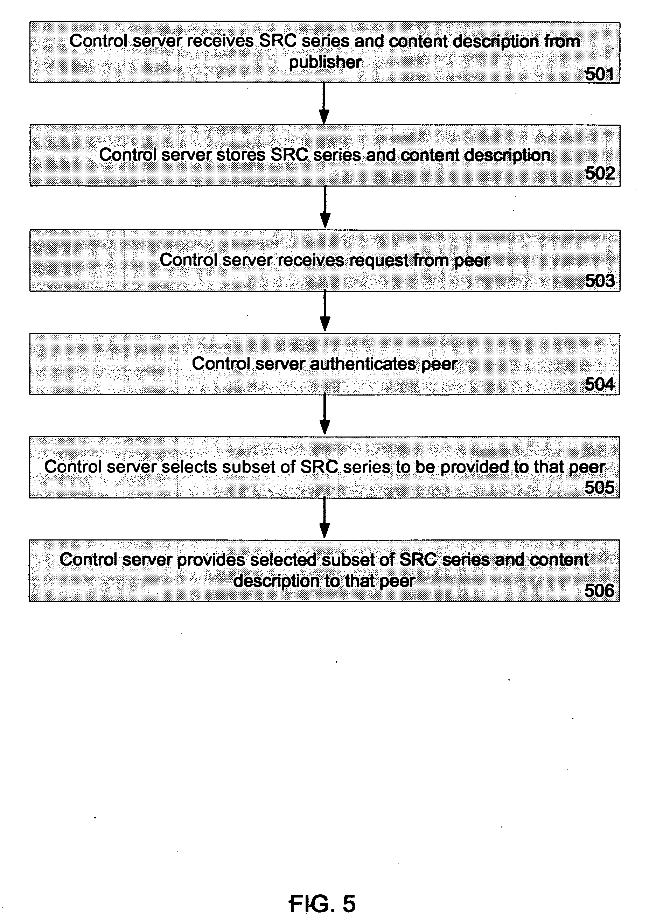

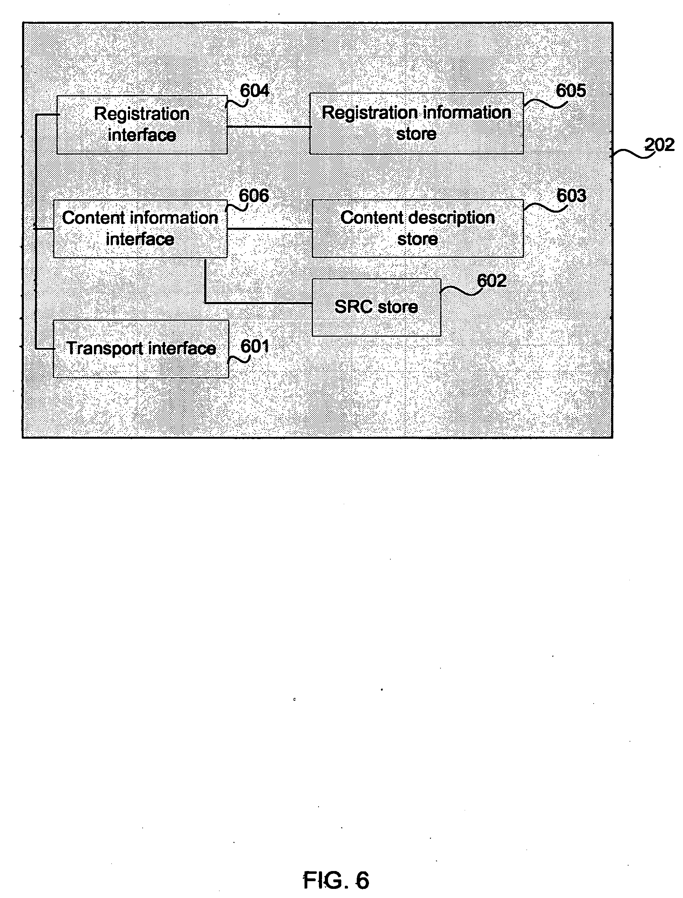

The operation of the control server 202 can be described with reference to FIG. 5 which shows an example flow diagram and FIG. 6 which shows an example architecture for the control server. The control server 202 receives the many SRC series and the content description from the publisher 201 (step 501) via a transport interface 601. The control server stores the SRC series in an SRC store 602 and the content description in a content description store 603 (step 502). As described above, the control server may also receive information from the publisher relating to how the SRC series should be distributed amongst peers. This information may be stored in the SRC store 602 or elsewhere. Subsequently, when the control server 202 receives a request from a peer 204 for information relating to the particular piece of content (step 503), the control server authenticates the peer (step 504). Peer information may be stored in a registration information store 605 accessed via a registration interface 604. This authentication process may be a one way (control server authenticating peer) or a two way (mutual) authentication process. This enables the control server to identify the peer (e.g. using a unique host identifier), although they may not require specific authorisation to participate in a particular content distribution cloud. Having identified the peer, the identification information (e.g. the host identifier) may be used to select, control, restrict and / or record information provided to the peer. For example, if the peer is found to act in a detrimental manner, they can be blocked from participating further in the cloud. The peer identifier may be allocated to a peer for use in all situations (e.g. all clouds that they join) or may be allocated on a more regular basis (e.g. per cloud, per publisher, per network provider, per month etc). The authentication of the control server with the peer may confirm to the peer that the control server is authorised to distribute information relating to the specific publisher, the specific content or that they are authorised by a third party authorisation body.

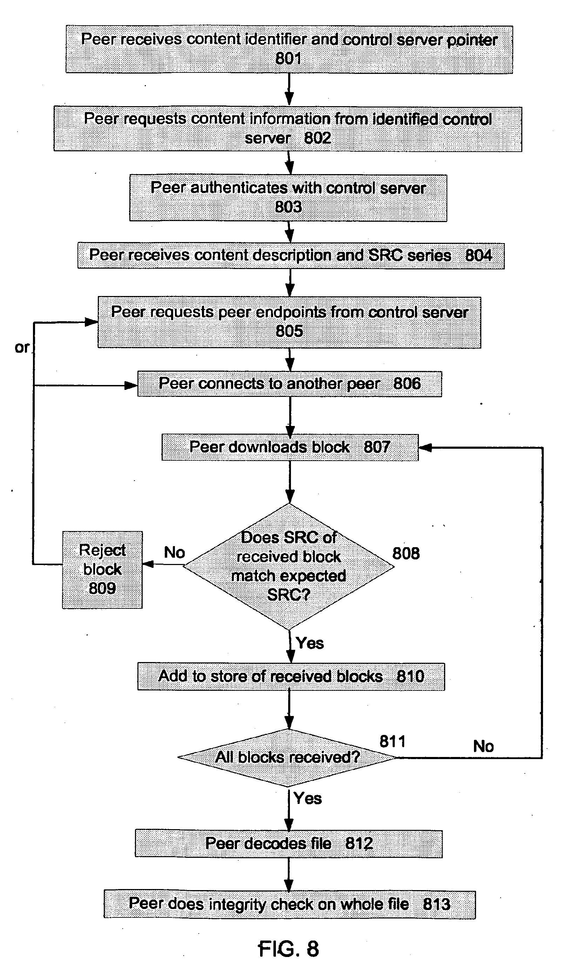

Having identified the peer making the request (in step 504), the control server selects a subset of the stored SRC series for the particular piece of content (step 505). This selection step may be performed by a content information interface 606. This selection step is described in more detail below. Having selected the subset of SRC series (in step 505), the control server provides the selected subset and the content description to the peer (step 506). The details of the peer may at this point, or subsequently when that peer has downloaded some of the content (e.g. after downloading the first block), be added to a list of peers that are actively participating in the content distribution cloud 205 (not shown in FIG. 5). The peer may be required to re-register with the control server in order to be added to or to remain on the list of active peers in the cloud. This list enables the control server to provide details of peers within a cloud to other peers upon request (as shown in FIG. 8 step 804).

Although the example architecture of FIG. 6 shows three separate information stores 602, 603, 605 it will be appreciated that some or all of these may be combined. Furthermore, some or all of the interfaces 601, 604, 606 may be combined in other example architectures.

As described above, in addition to providing the control server with the SRC series (in step 501), the publisher may also provide information on how the SRC series should be distributed to peers. This additional information may include the number, K, of SRC series which should be given to each peer and a method (e.g. a mapping function and a modifying function) to use to select the K SRC series from the total number, N, of SRC series generated by the publisher and stored on the server. Where this information is not provided by the publisher 201 it may be preset on the control server 202 provided by another network entity or may be variable according to predefined criteria.

A first example of the selection method would be to select the K SRC series at random from all the N SRC series. A second example of the selection method would be to select K SRC series sequentially from the N SRC series, so that series 1 to K would be given in response to the first request for content information, series (K+1) to 2K would be given in response to the second request etc. In these examples, the selection of SRC series is not necessarily related to the peer that made the request. This may provide a simple selection process however, it may be beneficial to record which SRC series are provided to which peers and to restrict their access to further SRC series in some way. This assists in guarding against a malicious user making multiple requests for information in order to obtain as much SRC information as possible so as to enable them to create a corrupt block which passes the validity check and can therefore be propagated throughout a cloud, thus poisoning it. One suitable method would be to record which SRC series are provided to a peer and then to re-send the same series in response to any further requests in relation to the same piece of content. A second suitable method would be to limit the number of requests that are serviced for a particular peer, for example servicing only one request an hour or three requests in total relating to a particular piece of content. Another suitable method would be to limit the maximum number of SRC series which are sent to each peer, as described below.

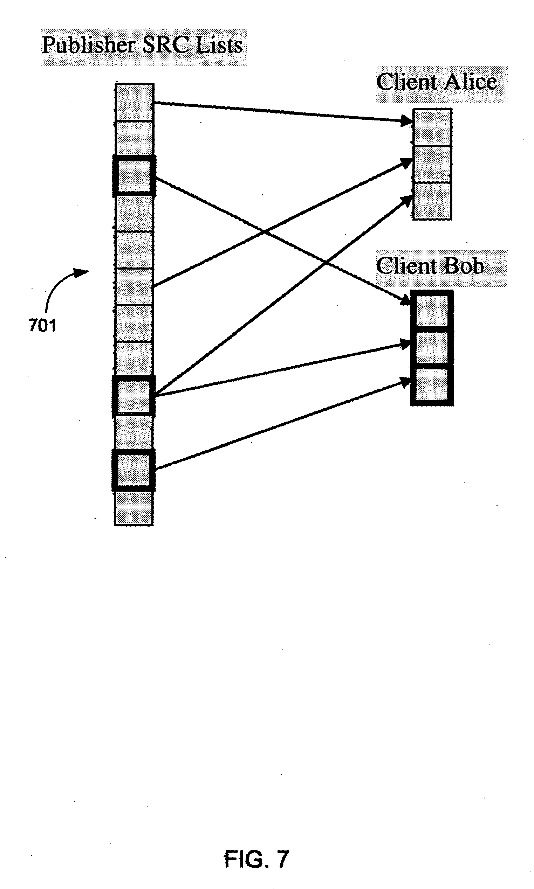

FIG. 7 shows a schematic diagram of the selection of SRC series for the example where N=12 and K=3. When a first peer, Alice, requests SRC series from the control server, her unique (and authenticated) ID (an identifier) is mapped using the specified function (i.e. the mapping function) to determine which 3 SRC series she is provided with (e.g. series 1, 6, and 9). When a second peer, Bob, requests SRC series from the control server, his unique ID is mapped using the same specified function to determine which SRC series he is provided with (e.g. series 3, 9 and 11). Use of a specified function ensures that different peers are given different groups of SRC series (e.g. Alice and Bob are only given one SRC series in common). The function is preferably selected to provide a good distribution of SRC series between clients. Other examples of suitable mapping functions include an identity function (e.g. use the bits from the identifier in order), a truncation function (e.g. use the first/last bits) and a rotor function (e.g. first bit of every byte specifies the first SRC, the second bit of every byte specifies the second SRC etc). Further examples of mapping functions are described below.

When using the mapping function, the peer's identifier may be used directly, or alternatively a modified form of the identifier may be used. The peer's identifier may be modified using a modifying function which may be specified by the publisher (as detailed above) or selected by the control server. A first example of a modifying function is the Secure Hash Algorithm - 1 (SHA-1). The SHA-1 value of the peer's unique ID can be calculated and this value (referred to as the 'modified identifier') can be used in one of many different ways according to the mapping function to determine which K SRC series are selected. In a first example of a mapping function, sets of bits may be taken from the hash value of the client's ID (the modified identifier) and then K sets of bits are used to specify which K SRC series should be provided to that peer. In an example where K=10 and the hash value of the client's ID (the modified identifier) is in the form of a 160-bit number, this 160-bit number may be split into ten 16-bit numbers and each 16-bit number then used to identify an SRC series. In another example of a mapping function, the resultant hash value may be split to provide a starting position in the set of SRC series, (e.g. 10$^{th}$ series in the set) and a number of step sizes to select the remaining series, (e.g. steps of 1 , 5, 4, 7, 3, 2, 6, 4, 9 resulting in the selection of the 11$^{th}$, 16$^{th}$, 20$^{th}$, 27$^{th}$, 30$^{th}$, 32$^{nd}$, 38$^{th}$, 42$^{nd}$ and 51$^{st}$ series). Use of a hash function as the modifying function, such as SHA-1 or MD5 (Message Digest 5), may be beneficial because a small change in data (i.e. a small change in the client's ID) results in a large change in hash value and hence should result in a large difference between the SRC series selected for the client. Use of a hash function is also beneficial because it ensures that the selection of SRC series is random, which may not necessarily be the case if the client ID or other identifier is used in its original form. This is because client IDs may all take the same general form and may be issued sequentially. Therefore two client IDs are likely to be similar whilst the hash values of client IDs are random. Furthermore, the size of the hash value may be smaller than the original data (e.g. the client's ID) which may make storage, use or transmission easier. Any suitable hash function may be used, although a hash function may be selected to give a suitable output bit length (e.g. ≥128 bits).

Another example of a peer identifier is the peer's public key which may be identified from (or comprise) the peer's unique ID. The public key may be used in its original form or a modified form (e.g. the hash function of the public key) may be used. Again there are many ways in which this can be used to determine which K SRC series are selected, including, but not limited to, the techniques described above.

By using a mapping between data associated with the peer (e.g. the client's ID or their public key), the control server can ensure that they provide the peer with the same subset of SRC series every time they request information about a particular piece of content. Alternatively, the control server (or the publisher) may set a restriction, R, on the number of different SRC series that may be provided to a particular peer, where $R \geq K$, so that irrespective of how many requests are made by a single peer, they cannot obtain all the SRC series associated with a particular piece of content. In this example the peer may not necessarily be provided with the same subset of SRC series in response to each request, but an upper limit (equal to R SRC series) is set on the amount of SRC information provided to the peer. This restriction may form part of the mapping function.

In an example where there is a piece of content which 10 million clients want, suitable values for N and K may be 1000 and 10 respectively. This provides about $10^{23}$ (or $2^{76}$) unique SRC sets. According to the birthday paradox, there will be a 50% chance that there exists a single pair of peers with an identical subset of 10 SRC series when there are $10^{11}$ subsets distributed to peers. The chance of a malicious peer having the same subset of SRC series as any other of the 10 million peers is negligible (1 in $10^{16}$).

The operation of a peer 204 can be described with reference to FIG. 8. The peer receives a content identifier and a control server pointer (step 801). This information may be received from a website, URI (Uniform Resource Identifier) or as part of an application experience (e.g. as part of an Interactive Media Player, iMP). Using this information, the peer 204 can request a content description from the identified control server 202 (step 802). As described above (in relation to FIG. 5 step 504), the peer authenticates with the control server (step 803) before the control server will provide the requested information. The peer receives the content description and K SRC series from the control server (step 804). The peer is responsible for keeping the SRC series information secure. As the control server and the peer have performed authentication (in steps 504 and 803), if the peer is found to be making the SRC information available to others, the control server can block the peer from participating in the content distribution cloud (e.g. by deleting that peer from the list of active peers in the cloud).

If the content description does not contain peer endpoint information, the peer then requests details of peer endpoints from the control server (step 805). These peer endpoints are details of one or more other peers which the peer can connect to in order to download the content. The peer endpoints may also include details of the seed 203, particularly in the early stages of a cloud 205 when there are not many peers within the cloud. The peer 204 then connects to one or more of the identified peer endpoints (step 806) and downloads a block of the content (step 807). Before adding the block to the peer's store of received blocks, forwarding the block to anyone else or using the block to create a newly encoded block, the integrity of the block is verified (step 808) by checking that the calculated SRCs of the received block matches the SRCs calculated using the SRC series provided by the control server. A simplified example of this calculation (which is performed within a finite field, as described above) is shown below for K=2:

The received block comprises $\alpha A + \beta B$, where A and B are original uncoded blocks and $\alpha$ and $\beta$ are random coefficients.

The received block comprises bytes B1 , B2...,Bn

1st SRC series:
SRC list includes $SRC\text{-}A_1$ and $SRC\text{-}B_1$
The seed is used to calculate pseudo-random numbers $R1_1, R2_1,...,Rn_1$

$$SRC\text{-}new_1 = (B1.R1_1) + (B2.R2_1) + ... + (Bn.Rn_1)$$

$$\text{Check that } SRC\text{-}new_1 = \alpha (SRC\text{-}A_1) + \beta (SRC\text{-}B_1)$$

2nd SRC series:
SRC list includes $SRC\text{-}A_2$ and $SRC\text{-}B_2$
The seed is used to calculate pseudo-random numbers $R1_2, R2_2...,Rn_2$

$$SRC\text{-}new_2 = (B1.R1_2) + (B2.R2_2) + \ldots + (Bn.Rn_2)$$

$$\text{Check that } SRC\text{-}new_2 = \alpha\,(SRC\text{-}A_2) + \beta\,(SRC\text{-}B_2)$$

If the integrity of the block is found to be suspect, i.e. one or more of the calculated SRCs do not agree, the peer rejects the block and does not store it (step 809). The peer may also make a note of the offending peer endpoint and not contact it or accept connections from it for the remainder of the content distribution session (not shown). Instead, the peer will connect to another peer endpoint (step 806) and if necessary will first request further details of peer endpoints from the control server 202 (step 805). If the integrity of the block is verified (in step 808), the peer adds the newly received block to its store of received blocks (step 810). The peer then determines whether it has received all the required blocks of the content (step 811). If it still requires additional blocks, it will proceed to download another block (step 807). Once the peer has downloaded all the required blocks of the content, the peer decodes the file (step 812) and does an integrity check on the whole downloaded file (step 81 3). Although this final step does not protect against cloud poisoning it is still a useful check that the content is that which the peer expects it to be. The integrity check may comprise a check of the calculated hash function of the downloaded file against a hash value contained within the content description. It is computationally unfeasible to create an entire content file which is corrupt but passes this test.

The examples described above use a 16-bit Galois field and 16-bit SRC by way of example only. Smaller or larger field and SRC sizes could be used instead. Use of larger field sizes is computationally more intensive but is more secure.

Although in the above description the same control server 202 receives both the content description and the SRC series from the publisher 201 and then provides both to peers 204, these two functions may be performed by different control servers or different nodes. In an example of this, the publisher 201 may (in FIG. 3, step 305) deposit the content description on a first control server and the SRC series on a second control server. The first control server would then receive the content description from the publisher (as in FIG. 5, step 501) and store the content description (step 502). In response to a request from a peer (in step 503), the first control server would provide the content description to the peer (step 506). The first control server would not perform the SRC selection step (step 505). Authentication may occur between the first control server and the peer (step 504) prior to the provision of the content description or, if the content description is considered public information, authentication may occur at a later stage, before more sensitive information is provided to the peer (e.g. details of other peers in the cloud, which are provided to the peer by a control server in response to the request shown in FIG. 8, step 805). If the first control server does not provide any information to the peer which is considered sensitive, authentication may not occur at any stage. In this example, the second control server would receive the SRC series from the publisher (step 501) and store them (step 502). In response to a request from a peer (in step 503) authentication would occur (step 504). The second control server would select a subset of the SRC series to be provided to the authenticated peer (step 505) and then provide this subset to the peer (step 506). Maintenance of the list of active peers in the cloud may be performed by the first server, the second control server, or by another node in the cloud. Where the SRC series are provided by a separate control server to the content description, the peer may be provided with the location of or a pointer to the second server either in the content description or separately. In such an example, either the first or the second control server could also perform the functions of the seed. In another example, the publisher could also perform the functions of the first and / or the second control server.

It will be appreciated by the skilled person that the above examples are provided by way of explanation only and the particular functions could be performed by different network elements and a single network element could perform many functions. For example, SRC generation could occur at the seed, the publisher or any other node that held the entire uncoded content file. In another example, SRC selection and distribution could occur at the publisher, the seed or another node.

In the description above, SRC series are deposited by the publisher onto a single control server 202, however it may be beneficial to deposit the information on more than one control server. The information deposited on each server may be the same or different SRC series may be deposited on each control server. Use of more than one control server for storage, selection and distribution of SRC series reduces the possibility of bottlenecks caused by very large numbers of peers all requesting SRC information simultaneously and also provides redundancy in case of control server failure. Where more than one such control server is used, the control servers may operate such that one is the operating control server whilst the other is the standby control server operable only when the operating control server fails. In another example, both control servers may be active at the same time and in this example peers may select one of the control servers at random for their initial connection and then should continue to communicate with that selected control server in order to ensure continuity of registration.

The methods described above are suitable for use in any content distribution network including networks using file transfer or streaming.

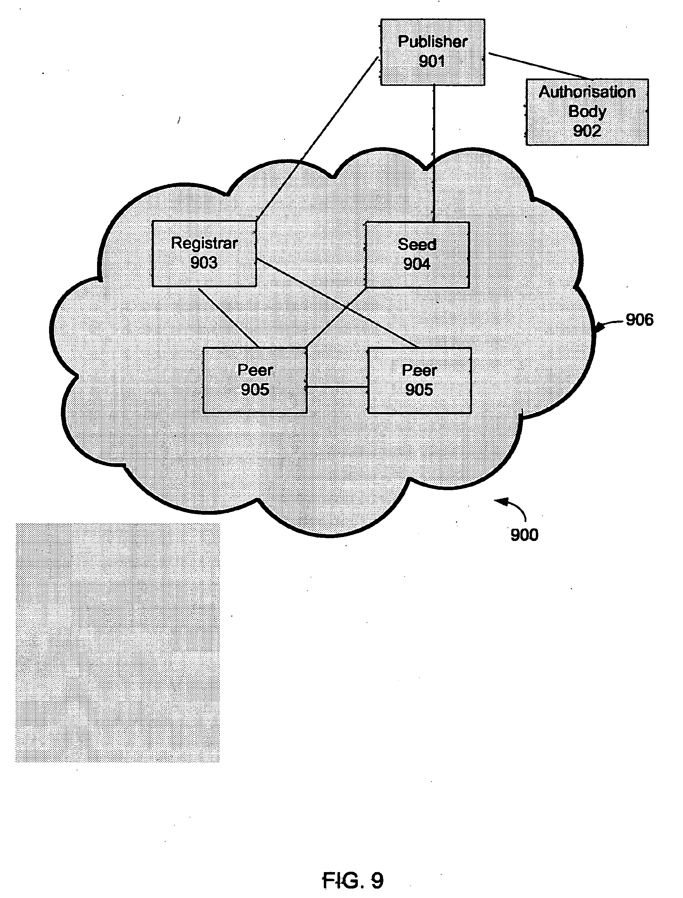

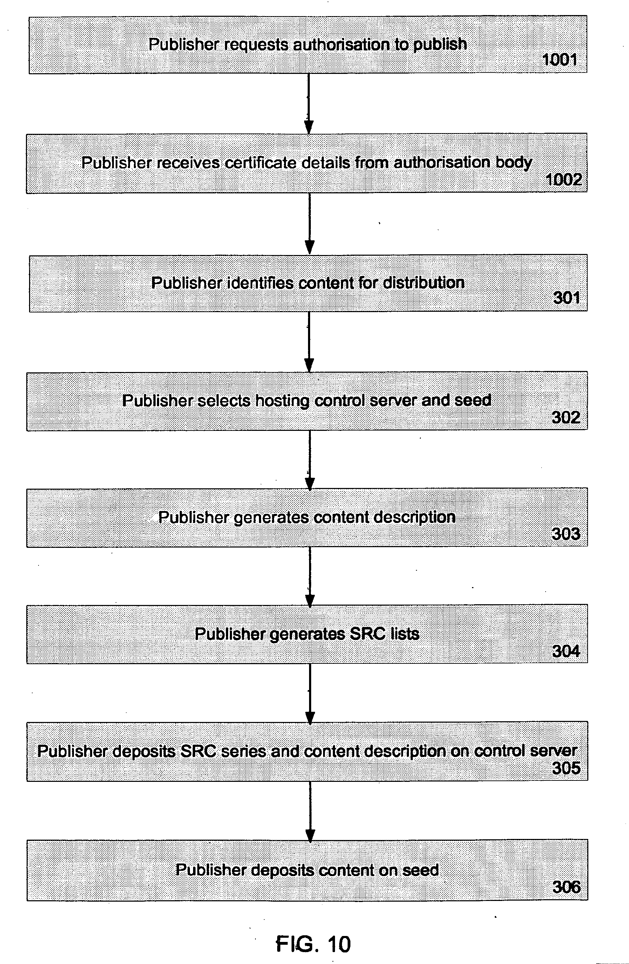

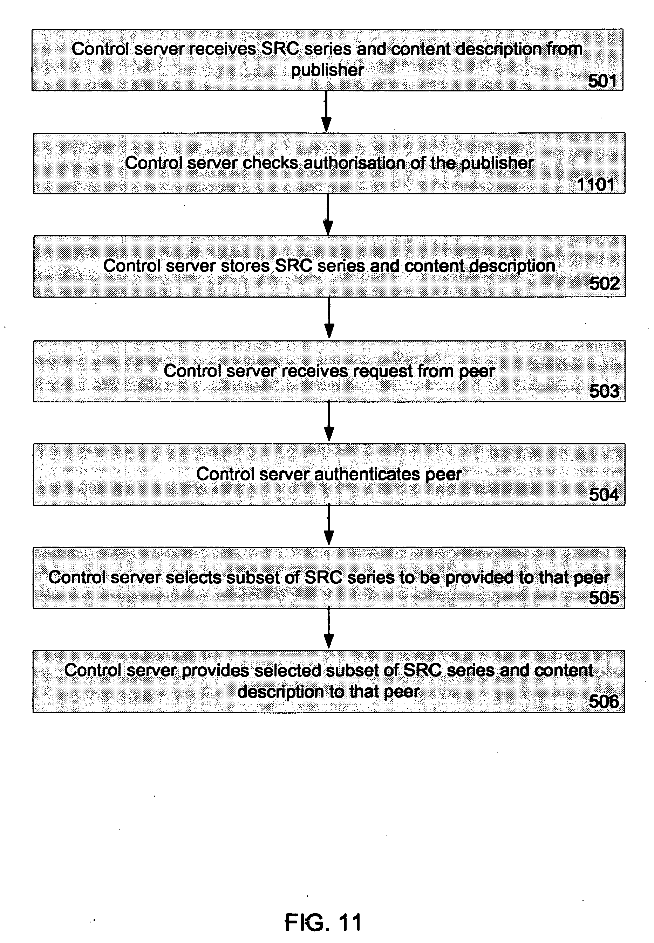

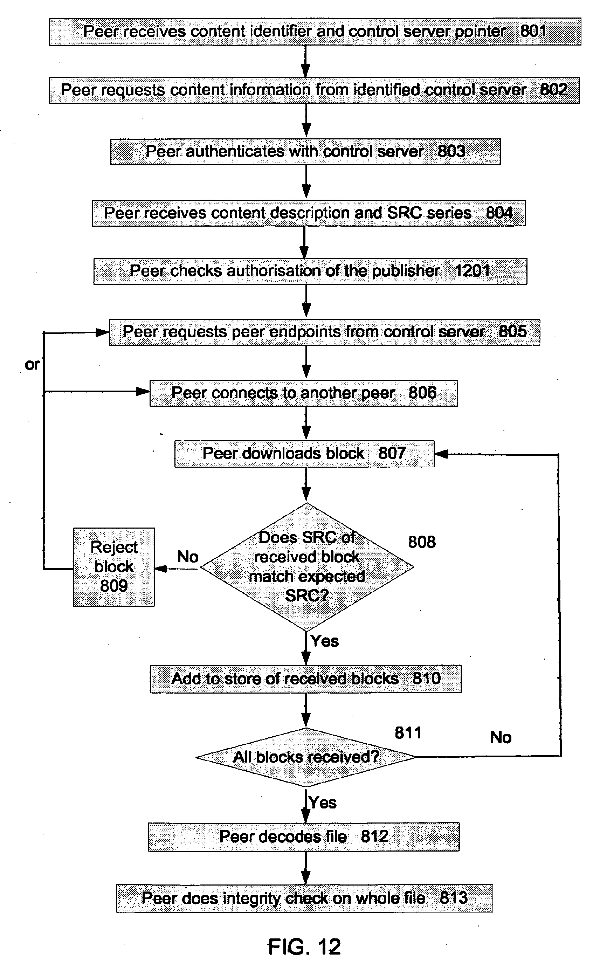

FIG. 9 is a schematic diagram of a content distribution system 900 developed by Microsoft (trade mark) which comprises a publisher 901, an authorisation body 902, a registrar 903, a seed 904 and two peers 905. Content distribution occurs within the cloud 906. As with FIG. 2, FIG. 9 shows some logical connections between parts of the system 900, however those shown are not exhaustive and are for illustration only. For example, all entities within the system 900 may be aware of and receive data from the authorisation body 902. One example of the operation of the system 900 can be described with reference to FIGS. 10-12, which are modified versions of the flowcharts described earlier and shown in FIGS. 3, 5 and 8 respectively.

In this system 900, the publisher 901 is authorised by an authorisation body 902 (also referred to as a certification authority). The publisher 901 requests authorisation (step 1001) and in response a certificate is issued and the certificate, or details of the certificate, are provided to the publisher (step 1002). The publisher then identifies content for distribution (step 301) and selects a hosting control server and seed (step 302). The control server which helps peers find other peers participating in the cloud is called a registrar (or tracker) 903. The content description generated by the publisher (in step 303) in this example is a secure content description (SCD) which is digitally signed by the publisher 901. The SCD includes details of the certificate issued to the publisher (by the authorisation body 902) and information to enable integrity checking of the downloaded content. The publisher generates the SRC lists (step 304) and deposits the SRC series and the SCD on the registrar 903 (step 305). The content is deposited on the seed 904 (step 306).

The registrar receives the SRC series and the SCD (step 501) and may then check the certificate details of the publisher 901 (step 1101). This may be achieved by the registrar 903 confirming that the publisher 901 is not on the Certificate Revocation List (CRL) published by the entity that issued the certificate to the publisher, in this case the authorisation body 902 (also referred to as a certification authority (CA)). The CRL lists certificates that although previously issued have subsequently been revoked by the CA or delegate (i.e. by the certificate issuing entity). The registrar 903 may hold copies of CRLs locally, but ideally checks with CAs or their delegates for updated CRLs regularly (e.g. every 15 or 30 minutes) to minimise the window of vulnerability. The certificate chain in the SCD may include details of where the master CRL is located for each authorising entity (e.g. a url, IP address or other endpoint description). As anyone who can issue a certificate can also revoke certificates that they issued, it may be necessary to check more than one CRL (e.g. where the publisher is authorised by a delegate of a main authorisation body, it is necessary to check the delegate's CRL to confirm the authorisation of the publisher and then the main authorisation body's CRL to confirm the authorisation of the delegate). Having confirmed that the authorisation is still valid, the registrar stores the SRC series and SCD (step 502) and subsequently, when it receives a request from a peer (step 503), it authenticates the peer (step 504), selects a subset of the SRC series for that peer (step 505) and provides the selected subset and the SCD for the identified content to the peer (step 506).

The peer 905 receives a content identifier and control server (or registrar) pointer, for example as part of an application they are running (step 801) and if they wish to obtain the particular piece of content, the peer requests content information from the registrar 903 (step 802). Having authenticated with the registrar (step 803), the peer receives the SCD and SRC series (step 804). On receipt of the SCD, the peer obtains information on the publisher's certificate chain (as described above). At this point, the peer may check that the publisher is still authorised (step 1201). This may be achieved by retrieving a Certificate Revocation List (CRL) issued by the authority which issued the certificate to the publisher to ensure that the publisher's certificate has not been revoked. As described above, a copy of the CRL may be stored at the registrar along with details of how up to date the CRL copy is. The peer may retrieve a copy of the CRL stored at the registrar or alternatively may retrieve a copy of the CRL master from the authorising body which issues the list (e.g. authorisation body 902). The CRL is likely to be a large file (e.g. several Mbytes) and consequently the peer may not necessarily download an updated CRL before every connection and may instead only download a new CRL when they join a new content cloud 906. By connecting to the registrar 903 to retrieve the CRL, rather than the certificate issuing body, the peer may avoid a potential bottleneck in the system. If a peer, when checking a CRL, identifies that the publisher of a piece of content has had their authorisation revoked, the peer may end its participation in the cloud and not download further blocks. The peer may also delete any blocks of the content that they have already received. If the content description does not contain peer endpoint information, the peer requests details of peer endpoints from the registrar (step 805) and then connects to one or more of the identified peer endpoints (step 806) in order to download a block of the content (step 807). Before adding the block to the peer's store of received blocks, forwarding the block to anyone else or using the block to create a newly encoded block, the integrity of the block is verified (step 808) as described above. If the integrity of the block is found to be suspect the peer rejects the block and does not store it (step 809). The peer will then connect to another peer endpoint (step 806) and if necessary will first request further details of peer endpoints from the registrar 903 (step 805). If the integrity of the block is verified (in step 808), the peer adds the newly received block to its store of received blocks (step 810). The peer then determines whether it has received all the required blocks of the content (step 811). If it still requires additional blocks, it will proceed to download another block (step 807). Once the peer has downloaded all the required blocks of the content, the peer decodes the file (step 812) and does an integrity check on the whole downloaded file (step 813). This integrity check may involve checking the hash value of the content using information contained within the SCD (e.g. hash function and hash value).

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

The steps of the methods described herein may be carried out in any suitable order, or simultaneously where appropriate.

It will be understood that the above description of a preferred embodiment is given by way of example only and that various modifications may be made by those skilled in the art.

**Claims**

1. A control node (202) for a content distribution system (200) which uses network coding to distribute content, a piece of content (401) comprising a plurality of blocks (402) and the control node comprising:

   a store (602) arranged to store a first plurality of data sets associated with the piece of content, wherein each data set comprises a secure random checksum for each of the plurality of blocks and data used in generating the secure random checksums;
   means for selecting (606) a second plurality of data sets from the first plurality of data sets for provision to a peer (204) wherein the second plurality of data sets comprises a subset of the first plurality of data sets; and
   means for providing (601) the second plurality of data sets to the peer, wherein each data set is usable to check the validity of the piece of content received from the system.

2. A control node according to claim 1 wherein the data used in generating the secure random checksums comprises at least one of: a numerical seed, a random number generating algorithm, and a stream of random or pseudo-random numbers.

3. A control node according to any of the preceding claims further comprising:

   means for determining (604) an identifier associated with the peer; and
   wherein the means for selecting (606) is arranged to select the second plurality of data sets based on the identifier.

4. A control node according to claim 3, wherein the identifier comprises one of: a unique identification number, a public key, an IP address, a network hardware address, a software activation key and a hardware serial number.

5. A control node according to claim 3 or 4, wherein the means for selecting (606) is further arranged to select the second plurality of data sets based on the identifier and a mapping function.

6. A control node according to claim 5, wherein the means for selecting (606) is further arranged to modify the identifier using a modifying function to create a modified identifier and to select the second plurality of data sets based on the modified identifier and the mapping function.

7. A method of enabling validity checking of a piece of content distributed across a network using network coding, the piece of content comprising a plurality of blocks and the method comprising:

   storing a first plurality of data sets associated with the piece of content, wherein each data set comprises a secure random checksum for each of the plurality of blocks and data used in generating the secure random checksums;
   selecting a second plurality of data sets from the first plurality of data sets for provision to a peer wherein the second plurality of data sets comprises a subset of the first plurality of data sets; and
   providing the second plurality of data sets to the peer, wherein each data set is usable to check the validity of the piece of content received from the network.

8. A method according to claim 7 wherein the data used in generating the secure random checksums comprises at least one of: a numerical seed, a random number generating algorithm, and a stream of random or pseudo-random numbers.

9. A method according to claim 7 or 8, wherein the step of selecting a second plurality comprises:

determining an identifier associated with the peer; and
selecting a second plurality of data sets from the first plurality of data sets for provision to the peer based on the identifier.

10. A method according to claim 9, wherein the identifier comprises one of: a unique identification number, a public key, an IP address, a network hardware address, a software activation key and a hardware serial number.

11. A method according to claim 9 or 10, wherein the step of determining an identifier comprises:

receiving a message from the peer; and
performing authentication with the peer to determine an identifier associated with the peer.

12. A method according to any of claims 7-11, wherein the step of selecting a second plurality of data sets is based on the identifier and a mapping function.

13. A method according to claim 12 wherein the mapping function is arranged to select a plurality of sets of bits from the identifier, and to select each of the second plurality of data sets based on a different set of bits from the selected plurality of bits.

14. A method according to claim 12 or 13, wherein the step of selecting a second plurality of data sets is based on the identifier and a mapping function comprises:

modifying the identifier using a modifying function to create a modified identifier; and
selecting the second plurality of data sets based on the modified identifier and the mapping function.

15. A method according to any of claims 12 to 14 wherein the mapping function is adapted to select a substantially different second plurality of data sets for a first and a second peer, wherein a first identifier is associated with the first peer and a second identifier is associated with the second peer and wherein the first and second identifiers are different.

16. A method according to claim 14, wherein the modifying function is a hash function.

17. A computer program comprising computer program code means adapted to perform all the steps of any of claims 7-16 when said program is run on a computer.

18. A computer program as claimed in claim 17 embodied on a computer readable medium.


**Patentansprüche**

1. Steuerknoten (202) für ein Inhaltverteilungssystem (200), das Netzcodierung verwendet, um Inhalt zu verteilen, wobei ein Stück Inhalt (401) eine Vielzahl von Blöcken (402) umfasst und der Steuerknoten umfasst:

einen Speicher (602), der ausgelegt ist, eine erste Vielzahl von, dem Stück Inhalt zugeordneten Datensätzen zu speichern, wobei jeder Datensatz eine sichere zufällige Prüfsumme für jede der Vielzahl von Blöcken umfasst sowie Daten, die beim Erzeugen der sicheren zufälligen Prüfsummen verwendet werden;
ein Mittel zum Auswählen (606) einer zweiten Vielzahl von Datensätzen aus der ersten Vielzahl von Datensätzen zur Bereitstellung an einen Peer (204), wobei die zweite Vielzahl von Datensätzen eine Teilmenge der ersten Vielzahl von Datensätzen umfasst; und
ein Mittel zum Bereitstellen (601) der zweiten Vielzahl von Datensätzen an den Peer, wobei jeder Datensatz verwendbar ist, um die Gültigkeit des vom System empfangenen Stücks Inhalt zu überprüfen.

2. Steuerknoten gemäß Anspruch 1, wobei die beim Erzeugen der sicheren zufälligen Prüfsummen verwendeten Daten wenigstens eines umfassen aus: eine numerische Saat, einen Zufallszahlenerzeugungsalgorithmus, einen Strom von Zufalls- oder Pseudozufallszahlen.

3. Steuerknoten gemäß einem der vorhergehenden Ansprüche, welcher umfasst:

   ein Mittel zum Bestimmen (604) eines dem Peer zugeordneten Bezeichners; und
   wobei das Mittel zum Auswählen (606) ausgelegt ist, die zweite Vielzahl von Datensätzen auf der Grundlage des Bezeichners auszuwählen.

4. Steuerknoten gemäß Anspruch 3, wobei der Bezeichner eines umfasst aus: eine eindeutige Identifikationsnummer, einen öffentlichen Schlüssel, eine IP-Adresse, eine Netzhardwareadresse, einen Softwareaktivierungsschlüssel und eine Hardwareseriennummer.

5. Steuerknoten gemäß Anspruch 3 oder 4, wobei das Mittel zum Auswählen (606) ferner ausgelegt ist, die zweite Vielzahl von Datensätzen auf der Grundlage des Bezeichners und einer Abbildungsfunktion auszuwählen.

6. Steuerknoten gemäß Anspruch 5, wobei das Mittel zum Auswählen (606) ferner ausgelegt ist, den Bezeichner unter Verwendung einer Modifizierungsfunktion zu modifizieren, um einen modifizierten Bezeichner zu schaffen und um die zweite Vielzahl von Datensätzen auf der Grundlage des modifizierten Bezeichners und der Abbildungsfunktion auszuwählen.

7. Verfahren zum Ermöglichen einer Gültigkeitsüberprüfung eines Stücks Inhalt, das über ein Netz verteilt ist, welches Netzcodierung verwendet, wobei das Stück Inhalt eine Vielzahl von Blöcken umfasst und das Verfahren umfasst:

   Speichern einer ersten Vielzahl von dem Stück Inhalt zugeordneten Datensätzen, wobei jeder Datensatz eine sichere zufällige Prüfsumme für jeden der Vielzahl von Blöcken umfasst sowie Daten, die beim Erzeugen der sicheren zufälligen Prüfsumme verwendet werden;
   Auswählen einer zweiten Vielzahl von Datensätzen aus der ersten Vielzahl von Datensätzen zur Bereitstellung an einen Peer, wobei die zweite Vielzahl von Datensätzen eine Teilmenge der ersten Vielzahl von Datensätzen umfasst; und
   Bereitstellen der zweiten Vielzahl von Datensätzen an den Peer, wobei jeder Datensatz verwendbar ist, um die Gültigkeit des vom Netz empfangenen Stücks Inhalt zu überprüfen.

8. Verfahren gemäß Anspruch 7, wobei die Daten, die beim Erzeugen der sicheren zufälligen Prüfsumme verwendet werden, wenigstens eines umfassen aus: eine numerische Saat, einen Zufallszahlenerzeugungsalgorithmus und einen Strom von Zufalls- oder Pseudozufallszahlen.

9. Verfahren gemäß Anspruch 7 oder 8, wobei der Schritt des Auswählens einer zweiten Vielzahl umfasst:

   Bestimmen eines dem Peer zugeordneten Bezeichners; und
   Auswählen einer zweiten Vielzahl von Datensätzen aus der ersten Vielzahl von Datensätzen zur Bereitstellung an den Peer auf der Grundlage des Bezeichners.

10. Verfahren gemäß Anspruch 9, wobei der Bezeichner umfasst eines aus:

   eine eindeutige Identifikationsnummer, einen öffentlichen Schlüssel, eine IP-Adresse, eine Netzhardwareadresse, einen Softwareaktivierungsschlüssel und eine Hardwareseriennummer.

11. Verfahren gemäß Anspruch 9 oder 10, wobei der Schritt des Bestimmens eines Bezeichners umfasst:

   Empfangen einer Nachricht von dem Peer; und
   Durchführen einer Authentifikation mit dem Peer, um einen dem Peer zugeordneten Bezeichner zu bestimmen.

12. Verfahren gemäß einem der Ansprüche 7-11, wobei der Schritt des Auswählens einer zweiten Vielzahl von Datensätzen auf dem Bezeichner und einer Abbildungsfunktion beruht.

**13.** Verfahren gemäß Anspruch 12, wobei die Abbildungsfunktion ausgelegt ist, eine Vielzahl von Mengen von Bits aus dem Bezeichner auszuwählen und jeden der zweiten Vielzahl von Datensätzen auf der Grundlage einer unterschiedlichen Menge von Bits aus der ausgewählten Vielzahl von Bits auszuwählen.

**14.** Verfahren gemäß Anspruch 12 oder 13, wobei der Schritt des Auswählens einer zweiten Vielzahl von Datensätzen auf dem Bezeichner beruht und eine Abbildungsfunktion umfasst:

Modifizieren des Bezeichners unter Verwendung einer modifizierenden Funktion, um einen modifizierten Bezeichner zu schaffen; und
Auswählen der zweiten Vielzahl von Datensätzen auf der Grundlage des modifizierten Bezeichners und der Abbildungsfunktion.

**15.** Verfahren gemäß einem der Ansprüche 12 bis 14, wobei die Abbildungsfunktion ausgelegt ist, um eine im Wesentlichen unterschiedliche zweite Vielzahl von Datensätzen für einen ersten und einen zweiten Peer auszuwählen, wobei ein erster Bezeichner dem ersten Peer zugeordnet ist und ein zweiter Bezeichner dem zweiten Peer zugeordnet ist und wobei der erste und der zweite Peer verschieden sind.

**16.** Verfahren gemäß Anspruch 14, wobei die modifizierende Funktion eine Hash-Funktion ist.

**17.** Computerprogramm umfassend ein Computerprogrammcodemittel, das ausgelegt ist, alle Schritte von einem der Ansprüche 7-16 durchzuführen, wenn das Programm auf einem Computer ausgeführt wird.

**18.** Computerprogramm gemäß Anspruch 17, das auf einem computerlesbaren Medium verkörpert ist.

**Revendications**

**1.** Noeud de contrôle (202) pour un système de distribution de contenu (200) utilisant un codage de réseau pour distribuer des contenus, un élément de contenu (401) comprenant une pluralité de blocs (402) et le noeud de contrôle comprenant :

- une mémoire (602) agencée pour mémoriser une première pluralité d'ensembles de données associée à l'élément de contenu, dans lequel chaque ensemble de données comprend une somme de contrôle aléatoire sécurisée pour chaque bloc de la pluralité de blocs et des données utilisées pour la génération des sommes de contrôle aléatoires sécurisées ;
- des moyens pour sélectionner (606) une seconde pluralité d'ensembles de données à partir de la première pluralité d'ensembles de données pour être fournie à un pair (204), dans lequel la seconde pluralité d'ensembles de données comprend un sous-ensemble de la première pluralité d'ensembles de données ; et
- des moyens pour délivrer (601) la seconde pluralité d'ensembles de données au pair, dans lequel chaque ensemble de données est utilisable pour vérifier la validité de l'élément de contenu reçu en provenance du système.

**2.** Noeud de contrôle selon la revendication 1, dans lequel les données utilisées pour la génération des sommes de contrôle aléatoires sécurisées comprennent au moins un élément parmi une graine numérique, un algorithme générateur de nombres aléatoires et un flux de nombres aléatoires ou pseudo-aléatoires.

**3.** Noeud de contrôle selon l'une quelconque des revendications précédentes, comprenant en outre des moyens pour déterminer (604) un identificateur associé au pair, et dans lequel les moyens pour sélectionner (606) sont agencés pour sélectionner la seconde pluralité d'ensembles de données en fonction de l'identificateur.

**4.** Noeud de contrôle selon la revendication 3, dans lequel l'identificateur comprend un élément parmi un nombre d'identification unique, une clé publique, une adresse IP, une adresse matérielle de réseau, une clé d'activation de logiciel et un numéro de série matériel.

**5.** Noeud de contrôle selon la revendication 3 ou 4, dans lequel les moyens pour sélectionner (606) sont agencés en outre pour sélectionner la seconde pluralité d'ensembles de données en fonction de l'identificateur et d'une fonction de mappage.

**6.** Noeud de contrôle selon la revendication 5, dans lequel les moyens pour sélectionner (606) sont agencés en outre pour modifier l'identificateur en utilisant une fonction modificatrice afin de créer un identificateur modifié et pour sélectionner la seconde pluralité d'ensembles de données en fonction de l'identificateur modifié et de la fonction de mappage.

**7.** Procédé de validation d'une vérification de validité d'un élément de contenu distribué sur un réseau utilisant un codage de réseau, l'élément de contenu comprenant une pluralité de blocs et le procédé comprenant les étapes consistant à :

- mémoriser une première pluralité d'ensembles de données associée à l'élément de contenu, dans lequel chaque ensemble de données comprend une somme de contrôle aléatoire sécurisée pour chaque bloc de la pluralité de blocs et des données utilisées pour la génération des sommes de contrôle aléatoires sécurisées ;
- sélectionner une seconde pluralité d'ensembles de données à partir de la première pluralité d'ensembles de données pour être fournie à un pair, dans lequel la seconde pluralité d'ensembles de données comprend un sous-ensemble de la première pluralité d'ensembles de données ; et
- délivrer la seconde pluralité d'ensembles de données au pair, dans lequel chaque ensemble de données est utilisable pour vérifier la validité de l'élément de contenu reçu en provenance du système.

**8.** Procédé selon la revendication 7, dans lequel les données utilisées pour la génération des sommes de contrôle aléatoires sécurisées comprennent au moins un élément parmi une graine numérique, un algorithme générateur de nombres aléatoires et un flux de nombres aléatoires ou pseudo-aléatoires.

**9.** Procédé selon la revendication 7 ou 8, dans lequel l'étape de sélection d'une seconde pluralité comprend les étapes consistant à :

- déterminer un identificateur associé au pair ; et
- sélectionner une seconde pluralité d'ensembles de données à partir de la première pluralité d'ensembles de données pour être fournie au pair en fonction de l'identificateur.

**10.** Procédé selon la revendication 9, dans lequel l'identificateur comprend un élément parmi un nombre d'identification unique, une clé publique, une adresse IP, une adresse matérielle de réseau, une clé d'activation de logiciel et un numéro de série matériel.

**11.** Procédé selon la revendication 9 ou 10, dans lequel l'étape de détermination d'un identificateur comprend les étapes consistant à :

- recevoir un message provenant du pair ; et
- effectuer une authentification avec le pair pour déterminer un identificateur associé au pair.

**12.** Procédé selon l'une quelconque des revendications 7 à 11, dans lequel l'étape de sélection d'une seconde pluralité d'ensembles de données est fondée sur l'identificateur et une fonction de mappage.

**13.** Procédé selon la revendication 12, dans lequel la fonction de mappage est agencée pour sélectionner une pluralité d'ensembles de bits à partir de l'identificateur et pour sélectionner chaque ensemble de la seconde pluralité d'ensembles de données en fonction d'un ensemble différent de bits provenant de la pluralité de bits sélectionnée.

**14.** Procédé selon la revendication 12 ou 13, dans lequel l'étape de sélection d'une seconde pluralité d'ensembles de données, fondée sur l'identificateur et une fonction de mappage, comprend les étapes consistant à :

- modifier l'identificateur en utilisant une fonction modificatrice afin de créer un identificateur modifié ; et
- sélectionner la seconde pluralité d'ensembles de données en fonction de l'identificateur modifié et de la fonction de mappage.

**15.** Procédé selon l'une quelconque des revendications 12 à 14, dans lequel la fonction de mappage est adaptée à sélectionner une seconde pluralité, sensiblement différente, d'ensembles de données pour un premier et un second pair, dans lequel un premier identificateur est associé au premier pair et un second identificateur est associé au second pair et dans lequel les premier et second identificateurs sont différents.

**16.** Procédé selon la revendication 14, dans lequel la fonction modificatrice est une fonction de hachage.

**17.** Programme informatique comprenant des moyens de codage de programme informatique adaptés à exécuter toutes les étapes de l'une quelconque des revendications 7 à 16 lorsque ledit programme est exécuté sur un ordinateur.

**18.** Programme informatique selon la revendication 17, réalisé sur un support lisible par un ordinateur.

FIG. 1

**FIG. 2**

Publisher identifies content for distribution

301

Publisher selects hosting control server and seed

302

Publisher generates content description

303

Publisher generates SRC lists

304

Publisher deposits SRC series and content description on control server

305

Publisher deposits content on seed

306

FIG. 3

FIG. 4

Control server receives SRC series and content description from publisher
501

Control server stores SRC series and content description
502

Control server receives request from peer
503

Control server authenticates peer
504

Control server selects subset of SRC series to be provided to that peer
505

Control server provides selected subset of SRC series and content description to that peer
506

FIG. 5

FIG. 6

FIG. 7

Peer receives content identifier and control server pointer
801

Peer requests content information from identified control
server   802

Peer authenticates with control server
803

Peer receives content description and SRC series   804

Peer requests peer endpoints from control server
805

or

Peer connects to another peer   806

Peer downloads block   807

Does SRC of received block match expected SRC?   808

No → Reject block 809

Yes

Add to store of received blocks   810

All blocks received?   811   No

Yes

Peer decodes file   812

Peer does integrity check on whole file   813

FIG. 8

FIG. 9

Publisher requests authorisation to publish — 1001

Publisher receives certificate details from authorisation body — 1002

Publisher identifies content for distribution — 301

Publisher selects hosting control server and seed — 302

Publisher generates content description — 303

Publisher generates SRC lists — 304

Publisher deposits SRC series and content description on control server — 305

Publisher deposits content on seed — 306

## FIG. 10

Control server receives SRC series and content description from publisher

501

Control server checks authorisation of the publisher

1101

Control server stores SRC series and content description

502

Control server receives request from peer

503

Control server authenticates peer

504

Control server selects subset of SRC series to be provided to that peer

505

Control server provides selected subset of SRC series and content description to that peer

506

FIG. 11

Peer receives content identifier and control server pointer 801

Peer requests content information from identified control server 802

Peer authenticates with control server 803

Peer receives content description and SRC series 804

Peer checks authorisation of the publisher 1201

Peer requests peer endpoints from control server 805

or

Peer connects to another peer 806

Peer downloads block 807

Reject block 809

No

Does SRC of received block match expected SRC? 808

Yes

Add to store of received blocks 810

All blocks received? 811

No

Yes

Peer decodes file 812

Peer does integrity check on whole file 813

FIG. 12